# EUROPEAN PATENT SPECIFICATION

(11) **EP 3 510 720 B1**
(45) Date of publication and mention of the grant of the patent: **01.06.2022**
(21) Application number: 16775635.2
(22) Date of filing: 28.09.2016
(51) Int. Cl.: H04L 7/033, H04L 25/06, H04L 25/49

(54) **CLOCK AND DATA RECOVERY IN PAM-4 TRANSMISSION SYSTEMS**
TAKT UND DATENRÜCKGEWINNING IN PAM-4 ÜBERTRAGUNGSSYSTEMEN
RECUPÉRATINO D'HORLOGE ET DE DONNÉES DANS DE SYSTÈMES DE TRANSMISSION À PAM-4

(43) Date of publication of application: 17.07.2019
(73) Proprietor: Huawei Technologies Co., Ltd., Longgang District Shenzhen, Guangdong 518129 (CN)
(72) Inventor: STOJANOVIC, Nebojsa, 80992 Munich (DE)
(74) Representative: Pfenning, Meinig & Partner mbB
(86) International application number: PCT/EP2016/073024
(87) International publication number: WO 2018/059671

(56) References cited:
- EP-A1- 0 296 253
- US-A1- 2012 008 723
- CHEN F ET AL: "Equalization and clock recovery for a 2.5-10-Gb/s 2-PAM/4-PAM backplane transceiver cell", IEEE JOURNAL OF SOLID-STATE CIRCUITS, IEEE SERVICE CENTER, PISCATAWAY, NJ, USA, vol. 38, no. 12, 1 December 2003 (2003-12-01), pages 2121-2130, XP011104331, ISSN: 0018-9200, DOI: 10.1109/JSSC.2003.818572

## Description

### TECHNICAL FIELD

The present invention relates to an apparatus and method for recovering clock and data from an M-level signal of a receiver in a transmission system such as - but not limited to - a fiber optical transmission system with direct detection optical receivers.

### BACKGROUND

In optical communications, intensity modulation (IM) is a form of modulation, in which the optical power output of a source is varied in accordance with some characteristic of the modulation signal. The envelope of the modulated optical signal corresponds to the modulating signal in the sense that the instantaneous power of the envelope is an envelope of the characteristic of interest in the modulation signal. Recovery of the modulating signal is usually achieved by direct detection (DD) through a photo-detector.

Next-generation ultra-high-speed short-reach optical fiber links will utilize small, cheap and low power consumption transceivers. All those requirements are mainly imposed due to the limited space of data center equipment. The transceivers shall support intra- and inter-data center connections from a few hundred meters up to several tens of kilometers, respectively.

Data centers are facilities that store and distribute the data on the Internet. With an estimated number of more than 100 billion of web pages on over 100 million websites, it is clear that those data centers shall be adapted to contain a huge amount of data. With almost two billion users accessing all these websites, including a growing amount of high bandwidth video, it is hard to comprehend how much data is being uploaded and downloaded every second on the Internet. A data center, as defined in the ANSI/TIA/EIA-942 standard "Telecommunications Infrastructure Standard for Data Centers", is a building or portion of a building whose primary function is to house a computer room and its support areas. The main functions of a data center are to centralize and consolidate information technology (IT) resources, house network operations, facilitate e-business and to provide uninterrupted service to mission-critical data processing operations. Data centers can be part of an enterprise network, a commercial venture that offers to host services for others or a co-location facility where users can place their own equipment and connect to the service providers over the building's connections. Data centers may serve local area networks (LANs) or wide area networks (WAN) and may be comprised of switches connecting user devices to server devices and other switches connecting server devices to storage devices.

A preferred solution may be to transmit 100 Gbit/s per wavelength, which is very challenging when a very cheap solution is required. A coherent approach is out of scope as it requires high power and expensive devices. Therefore, IM and DD schemes are preferred. The mature on-off keying modulation format, widely used in non-coherent systems, has been also investigated for so-called 100-G applications at 100 Gbit/s per wavelength speed. However, such a solution would require expensive high-bandwidth optics and electronics. To overcome that drawback, advanced modulation formats supported by digital signal processing (DSP) have been investigated as an alternative technology to support 100-G applications, the most promising candidates being duo-binary 4-level pulse amplitude modulation (DB-PAM-4), discrete multi-tone modulation (DMT) and carrier-less amplitude and phase modulation (CAP). All the aforementioned approaches require either expensive components or enhanced DSP or both of them and cannot be considered as serious candidates for data center connections.

As a DSP has to be avoided, simple analog equalization schemes included in a clock data recovery (CDR) block are needed. DMT and CAP require transmitter and receiver DSP blocks and are not considered seriously for cheap transceivers. Then, the PAM-4 format is remaining as one option since a transmitter (Tx) does not require a digital-to-analog converter (DAC). Also, at the receiver side, a high resolution analog-to-digital converter (ADC) is not necessary if the transmission systems can be designed to provide an acceptable bit error rate (BER) for a forward error correction (FEC) block.

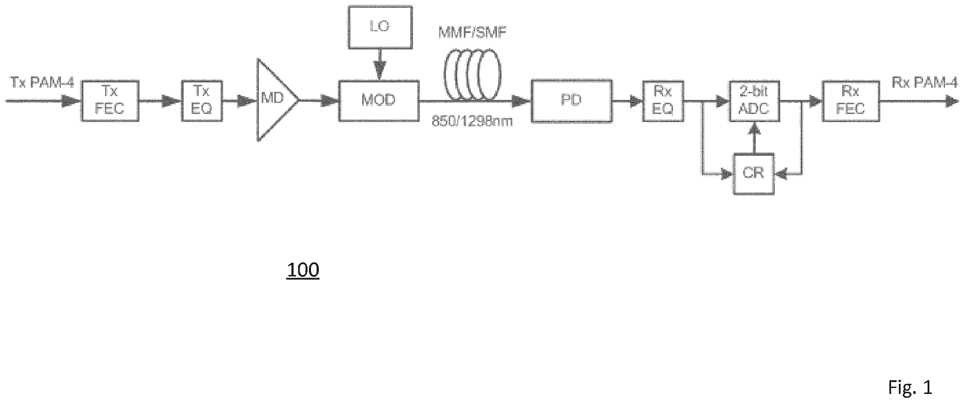

Fig. 1 shows a schematic block diagram of a conventional IM/DD-based PAM-4 transmission system 100. A transmission PAM-4 signal (Tx PAM-4) is FEC encoded by an encoder (Tx FEC) and equalized by an equalizer (Tx EQ) at the transmitter side, for example, by using a simple analog equalizer (pre-emphases), amplified by a modulator driver (MD) and converted in the optical domain by a modulator (MOD) and a local oscillator laser (LO). The obtained optical signal is transmitted over a multimode fiber (MMF) or a single mode fiber (SMF) and detected by using a photo-diode (PD). The obtained electrical signal is equalized (Rx EQ), for example, by a continuous-time linear equalizer (CTLE) or a multi-tap finite impulse response filter (FIR). A subsequent clock recovery (CR) block uses signals before and after a 2-bit ADC to extract clock from the received signal. After a FEC decoder (Rx FEC), the BER of an obtained PAM-4 signal (Rx PAM-4) at the receiver output should be below some predefined threshold.

The architecture of Fig. 1 is a simple and cheap solution for an optical transmission system. All blocks can operate at high speed and the clock recovery (CR) block can be kept simple. However, due to bandwidth limitations of electrical circuits, it is not a preferred solution to work with analog values and at frequencies higher than the symbol rate. So far, in PAM-4 systems for example, the CR block based on two samples per symbols is implemented. In on-off keying (OOK) systems, a preferable CR block was based on an Alexander nonlinear phase detector using two samples per symbol and a specific logic to derive clock. This phase detector uses three samples A, B and C at 2fs frequency, where fs corresponds to the symbol rate and verifies fs=1/UI where UI corresponds to a unit interval (i.e., the time period T), and makes a decision whether the clock is early or late. Phase detector outputs can be expressed as "-", "0", and "+" (which can mean "early", "ambiguous", and "late", respectively). The signs of samples can be expressed as "-" and "+", while "+/-" means that this sample is irrelevant if other conditions are fulfilled.

Linear and nonlinear phase detectors using two samples per symbol are known, which are often used in practical PAM-4 systems. The linear variant deals with analog and digital signals, selects "good transitions" and has very good jitter performance, but the main problem comes from oversampling and handling analog values. The nonlinear variant is based on selective transitions of an Alexander phase detector. This variant introduces more jitter, but the implementation is not difficult at medium symbol rates. A disadvantage of those two variants is oversampling, which presents a big problem at high data speeds, for example, at 56G, for which a 112G clock is required. Some solutions based on a single sample per symbol suffer either from the fact that they require analog signal processing or there are problems related to timing error detector characteristic (TEDC) such as asymmetric shape or large hang-up range.

It should be noted that, in general for well-designed phase detectors, two samples per symbol are always better than one sample per symbol. In the ideal case (i.e., when there is no implementation constraint), analog phase detectors are also better than digital (quantized) phase detectors.

An eye diagram is a common indicator of the quality of signals in high-speed digital transmissions. An oscilloscope generates an eye diagram by overlaying sweeps of different segments of a long data stream driven by a master clock. Overlaying many bits produces an eye diagram, so called because the resulting image looks like the opening of an eye. In an ideal world, eye diagrams would look like rectangular boxes. In reality, communications are imperfect, so that the transitions do not line perfectly on top of each other, which results in an eye-shaped pattern. Differences in timing and amplitude from bit to bit cause the eye opening to shrink.

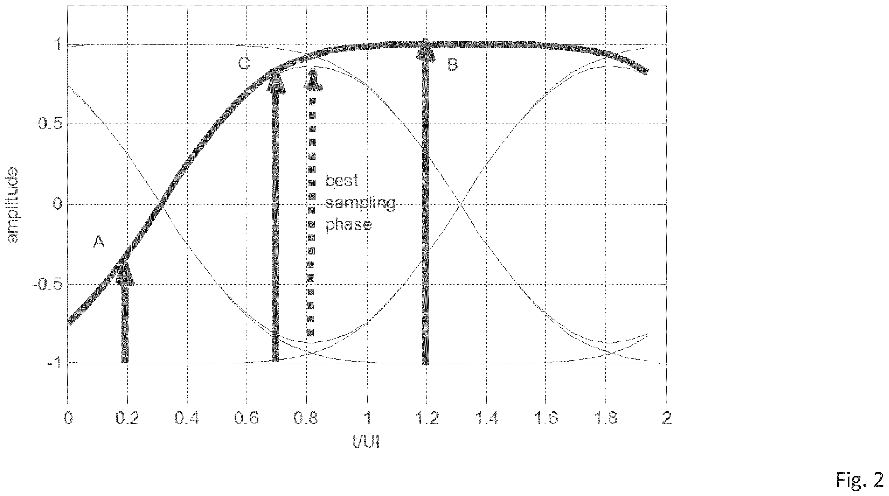

Fig. 2 shows a time diagram with a schematic eye diagram of a received signal with different sampling phases in the case of an early sampling. More specifically, Fig. 2 depicts an example of an early sampling phase with samples A, B, and C and a best sampling phase (BSP) at the highest opening of an eye diagram, where the sample C is shortly before the best sampling phase. The Alexander phase detector uses only the signs of three samples and drives an oscillator.

A truth table is a mathematical table used in logic - specifically in connection with Boolean algebra, Boolean functions, and propositional calculus - to compute the functional values of logical expressions on each of their functional arguments, that is, on each combination of values taken by their logical variables. Practically, a truth table is composed of one column for each input variable, and one final column for all of the possible results of the logical operation that the table is meant to represent. Each row of the truth table therefore contains one possible configuration of the input variables and the result of the operation for those values.

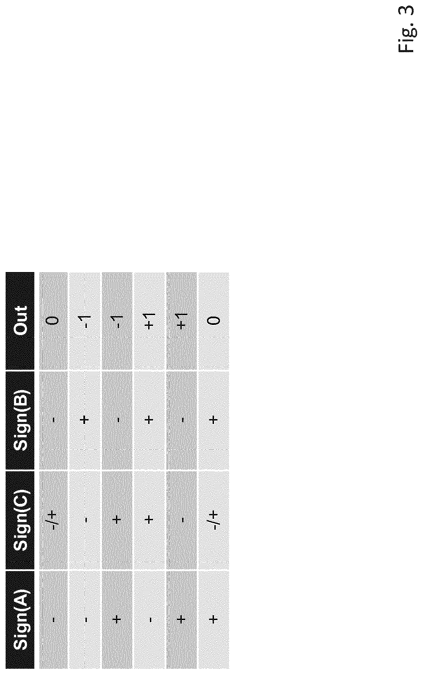

Fig. 3 shows a truth table of an Alexander phase detector, wherein the respective signs: Sign(A), Sign(B) and Sign(C) of the samples A, B and C of Fig. 2 with respect to the best sampling phase are used as input variables of the truth table to derive output values -1, 0, and +1 for controlling the oscillator. The values "-", "0" and "+" can be interpreted in the sense of "early", "ambiguous" and "late", respectively. However, as already mentioned above, this phase detector is disadvantageous due to oversampling and high jitter in PAM-4 systems.

European patent application EP 0,296,253 A1 provides a circuit for controlling the discrimination timing so that it is best adapted for discriminating a multi-level signal. The gradient of a multi-value signal is discriminated at a central discrimination moment from the discrimination data at at least three consecutive discrimination moments, lag in the discrimination timing is determined from the gradient and an error signal at the central discrimination moment, and the timing is so controlled that the shift in the phase of the discrimination clocks decreases. Further, it is made possible to perform two kinds of gradient discrimination, and the gradient discrimination is effected alternatively depending upon the condition of the circuit.

US patent application US 2012,008,723 A1 provides phase detection methods. According to a first embodiment, a signal is sampled in order to obtain an amplitude sample. Then an absolute value of the difference of the amplitude sample minus an average of amplitude samples is calculated. According to a second embodiment, the signal is sampled at a first and second phase. This results in first and second amplitude samples which are compared to a first and second plurality of thresholds, respectively, in order to assign first and second weighting values to each first and second amplitude sample, respectively, depending on to which range between two adjacent thresholds the first and second amplitude sample belong. Then the sum or difference of said first and second weighting values is calculated.

### SUMMARY

It is therefore an object of the present invention to provide a clock and data recovery apparatus and method, by means of which clock and data recovery can be further simplified and sampling speed can be lowered.

The object is achieved by the features of the independent claims. Further embodiments of the invention are apparent from the dependent claims, the description and the figures.

According to a first aspect, the invention relates to an apparatus for recovering clock and data from an M-level signal of a receiver in a transmission system, where M is a positive integer and a power of two and at least 4, and wherein two consecutive analog data of the M-level signal are sampled at a distance of one symbol period with respect to each other. The apparatus comprises an M-level log₂(M)-bit analog-to-digital converter (ADC) connected at an input of the apparatus, the M-level log₂(M)-bit ADC being adapted to output an outer level bit corresponding to a polarity of an amplitude difference between an analog data of the M-level signal and a closest value in the range of voltage threshold from 2-M to M-2 and adapted to output the most significant bit corresponding to a polarity of an amplitude difference between the analog data of the M-level signal and a voltage threshold equal to zero; a first voltage comparator connected at the input of the apparatus, the first voltage comparator being adapted to compare a first amplitude difference corresponding to an amplitude difference between the analog data and a first controllable threshold value, where the first controllable threshold value has an amplitude equal to a sum of M-1 and a first quantization value; a second voltage comparator connected at the input of the apparatus, the second comparator being adapted to compare a second amplitude difference corresponding to an amplitude difference between the analog data and a second controllable threshold value, the second controllable threshold value has an amplitude equal to a sum of 1-M and a second quantization value; and a three-valued logic unit adapted to generate a phase detection output, through a truth table, which outputs a truth value amongst -1, 0 and +1, based on a polarity of the most significant bit, a polarity of the outer level bit and a polarity of an amplitude difference to be selected amongst the first and second amplitude differences; a filter adapted to filter the truth value output from the three-valued logic unit; and an oscillator adapted to receive the filtered truth value and generate a clock signal to be provided to the M-level log₂(M)-bit ADC.

Thereby, the proposed clock and data recovery (CDR) apparatus can be advantageously used in transmission systems with M-level signals (e.g., PAM-4 or PAM-8 or other multi-level transmission systems). Indeed, clock extraction at very high baud (Bd) rates can be carried out since the proposed CDR apparatus uses only one sample per symbol. The proposed CDR apparatus is also easy to implement as it requires only digital circuits and does not deal with analog values. Furthermore, the proposed CDR apparatus can control the sampling phase by adjusting the phase detector thresholds. In addition, it can enable timing in high-speed systems, in which the clear multi-level (e.g., PAM-4 or PAM-8) signal is available before clock and data recovery, by using high bandwidth components and systems that do not require an enhanced DSP after the ADC block, which is the main target for small-size and low-power consumption transceivers.

According to a first implementation of the apparatus according to the first aspect, the M-level signal has M equidistant levels, the M levels being odd integers starting from ±1, and the analog data has an amplitude outside the range from 2-M to M-2.

According to a second implementation of the apparatus according to the first aspect or the first implementation of the first aspect, the first and second controllable threshold values are controlled in order to minimize a bit error rate.

According to a third implementation of the apparatus according to the second implementation of the first aspect, the first and second controllable threshold values being controlled by adjusting the first and second quantization values.

According to a fourth implementation of the apparatus according to the third implementation of the first aspect, the first and second quantization values are adjusted so as to have the first and second controllable threshold values varying in a reverse direction or in a same direction.

According to a fifth implementation of the apparatus according to the first aspect or any one of the preceding implementations of the first aspect, the selected amplitude difference is the smallest amplitude absolute difference amongst the first amplitude absolute difference and the second amplitude absolute difference.

According to a sixth implementation of the apparatus according to the fifth implementation of the first aspect, the amplitude difference selection is performed by the most significant bit.

According to a seventh implementation of the apparatus according to the sixth implementation of the first aspect, an output signal of the three-valued logic unit is given by the following truth table provided that the absolute values of X₁ and X₂ are strictly greater than M-2, i.e., abs(X₁)>M-2 and abs(X₂)>M-2 and M=4:

| sign(X₁) | sign(X_{2q}-X₂) | sign(X₂) | sign(X_{1q}-X₁) | OUT/truth value |
|---|---|---|---|---|
| - | - | - | + | +1 |
| - | - | + | - | +1 |
| + | + | - | + | +1 |
| + | + | + | - | +1 |
| - | + | - | - | -1 |
| - | + | + | + | -1 |
| + | - | - | - | -1 |
| + | - | + | + | -1 |
| otherwise | | | | 0 |

where X₁ and X₂ are two consecutive analog data of the M-level signal sampled at a distance of one symbol period with respect to each other, sign(X₁) and sign(X₂) correspond to the polarity of their respective most significant bit, X_{1q} refers to X₁ and is a threshold value amongst the first and second controllable threshold values, X_{2q} refers to X₂ and is a threshold value amongst the first and second controllable threshold values, sign(X₁-X_{1q}) refers to X₁ and corresponds to the polarity of the selected amplitude difference amongst the first and second amplitude differences, and sign(X₂-X_{2q}) refers to X₂ and corresponds to the polarity of the selected amplitude difference amongst the first and second amplitude differences.

According to an eighth implementation of the apparatus according to the first aspect or any one of the preceding implementations of the first aspect, the M-level signal is an M-pulse amplitude modulation signal.

According to a ninth implementation of the apparatus according to the eighth implementation of the first aspect, the outer level bit is a least significant bit when M equals four.

The above object is also solved in accordance with a second aspect.

According to the second aspect, the invention relates to a method for recovering clock and data from an M-level signal of a receiver in a transmission system, where M is a positive integer and a power of two and at least 4, and wherein two consecutive analog data of the M-level signal are sampled at a distance of one symbol period with respect to each other. The method comprises the steps of outputting an outer level bit corresponding to a polarity of an amplitude difference between an analog data of the M-level signal and a closest value in the range of voltage threshold from 2-M to M-2, outputting the most significant bit corresponding to a polarity of an amplitude difference between the analog data of the M-level signal and a voltage threshold equal to zero, comparing a first amplitude difference between the analog data and a first controllable threshold value, where the first controllable threshold value has am amplitude equal to a sum of M-1 and a first quantization value, comparing a second amplitude difference between the analog data and a second controllable threshold value, where the second controllable threshold value has an amplitude equal to a sum of 1-M and a second quantization value, and generating a phase detection output, through a truth table, which outputs a truth value amongst -1, 0 and +1, based on a polarity of the most significant bit, a polarity of the outer level bit and a polarity of an amplitude difference to be selected amongst the first and second amplitude differences, filtering the truth value, receiving the filtered truth value, and generating a clock signal based on the received filtered truth value.

The above object is also solved in accordance with a third aspect.

According to the third aspect, the invention relates to a computer program comprising a program code for performing the method according to the second aspect when executed on a computer.

Thereby, the method can be performed in an automatic and repeatable manner.

The computer program can be performed by the above apparatus. The apparatus can be programmably arranged to perform the computer program.

More specifically, it should be noted that the above apparatus may be implemented based on a discrete hardware circuitry with discrete hardware components, integrated chips or arrangements of chip modules, or based on a signal processing device or chip controlled by a software routine or program stored in a memory, written on a computer-readable medium, or downloaded from a network, such as the internet. The above apparatus may be implemented without signal transmission or receiving capability for simply controlling the transmission or reception function of a corresponding transmitter device or receiver device.

It shall further be understood that a preferred embodiment of the invention can also be any combination of the dependent claims or above embodiments with the respective independent claim.

These and other aspects of the invention will be apparent and elucidated with reference to the embodiments described hereinafter.

### BRIEF DESCRIPTION OF THE DRAWINGS

In the following detailed portion of the present disclosure, the invention will be explained in more detail with reference to the exemplary embodiments shown in the drawings, in which:
- Fig. 1: shows a schematic block diagram of a simple conventional IM/DD-based PAM-4 transmission system 100, in which the present invention can be implemented;
- Fig. 2: shows a time diagram with a schematic eye diagram of a received signal with different sampling phases in the case of an early sampling;
- Fig. 3: shows a truth table of a conventional Alexander phase detector;
- Fig. 4: shows a signal amplitude versus a normalized time (t/UI) depicting an eye diagram after equalization of a received PAM-4 signal according to an embodiment of the present invention;
- Fig. 5: shows a truth table of a phase detector according to an embodiment of the present invention;
- Fig. 6: shows TEDC versus a normalized time (t/UI) at two Rx input powers (0dBm and -10dBm) according to an embodiment of the present invention;
- Fig. 7: shows the corresponding eye diagram of Fig. 6 at a Rx input power of 0dBm according to an embodiment of the present invention;
- Fig. 8: shows the corresponding eye diagram of Fig. 6 at a Rx input power of -10dBm according to an embodiment of the present invention;
- Fig. 9: shows a signal amplitude versus a normalized time (t/UI) depicting an eye diagram after equalization of a received PAM-4 signal at a BER of 0.004 for (a): a 28GBd system receiving an input power of -10dBm and (b): a 56GBd system receiving an input power of -4dBm, according to an embodiment of the present invention;
- Fig. 10: shows TEDC versus a normalized time (t/UI) for the respective 28GBd and 56GBd systems of Fig. 9 according to an embodiment of the present invention;
- Fig. 11: shows TEDC versus a normalized time (t/UI) for different pairs of thresholds according to an embodiment of the present invention;
- Fig. 12: shows a comparison of the PD performance between a conventional linear phase detector (LPD) and a proposed phase detector (NPD) using (a): an estimated root mean square Jitter (Jrms) versus the input power (Pin) and (b): BER versus Pin, according to an embodiment of the present invention;
- Fig. 13: shows an assessment of the NPD performance using (a): an eye diagram at a Pin of 2dBm and (b): TEDC versus a normalized time (t/UI) for two pairs of PD thresholds, according to an embodiment of the present invention;
- Fig. 14: shows a comparative BER performance between the default and optimized NPD thresholds with respect to the LPD thresholds, according to an embodiment of the present invention; and
- Fig. 15: shows a schematic block diagram of a proposed clock and data recovery device 200 according to an embodiment of the present invention.

Identical reference signs are used for identical or at least functionally equivalent features.

### DETAILED DESCRIPTION OF EMBODIMENTS OF THE INVENTION

According to the following embodiments, a new phase detection approach for use in connection with clock and data recovery in multi-level signal transmission systems (e.g., PAM-4, PAM-8 or other PAM-M where M is a number of levels that is a positive integer and a power of two) is provided. The new phase detection approach uses only one sample per symbol, which enables the clock extraction at very high baud (Bd) rates, and can be implemented based on a pure digital architecture with lowest sampling speed to recover the transmitted multi-level signal. Circuit schemes are thus easy to implement as they require only digital circuits and do not have to cope with analog values. The proposed phase detection approach can control sampling phase by adjusting the thresholds of the phase detector (PD) and further enable timing in high-speed systems where the multi-level signal is already available before clock and data recovery. It can be achieved by using high bandwidth components and systems that do not require an enhanced DSP after the ADC block, so that it is suitable for small-size and low-power consumption transceivers.

Various embodiments of the present invention will now be described based on a PAM-4 transmission system with an optical fiber. The new algorithm of the proposed new phase detection approach works with a single sample per symbol. The PAM-4 signal levels are equal to -3, -1, +1, and +3.

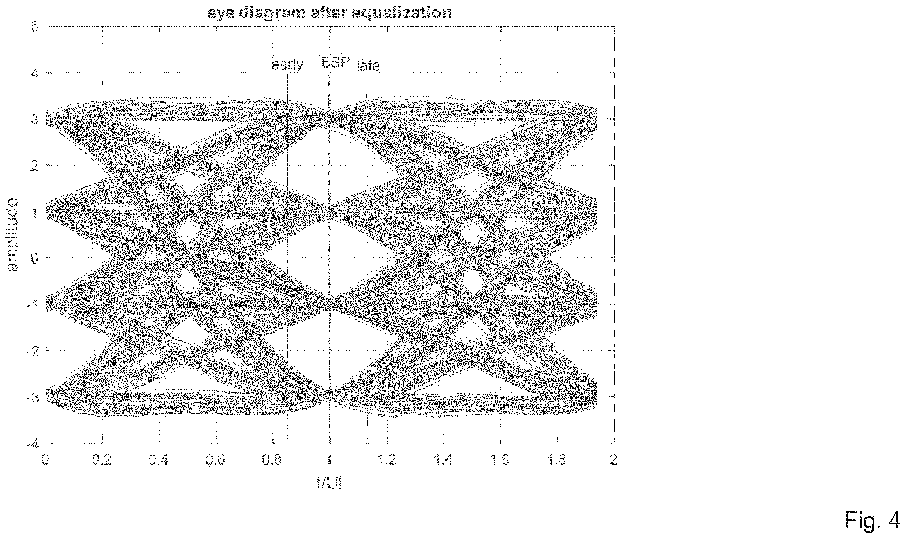

Fig. 4 shows a signal amplitude versus a normalized time (t/UI) depicting an eye diagram after equalization of a received PAM-4 signal according to a first embodiment of the present invention. The PAM-4 signal is equalized through a CTLE whose parameters are optimized based on a multi-modulus algorithm with a single sample per symbol. The best sampling position is indicated by the dashed arrow "BSP". At that position, the eye diagrams have their maximum opening, so that the best signal-to-noise ratio can be obtained.

A rule of the proposed phase detection (PD) scheme is to discard all samples that are in the range of amplitude level from "-2" to "+2" in Fig. 4. This is a so-called bad region. Only two consecutive samples X₁ and X₂ that are at a distance of 1 UI and out of said range of amplitude level will be considered for clock and data recovery.

A single sample X is compared to the closest PD outer level X_{q}, where X_{q} = X_{down} if X_{q}<0 and X_{q}=Xᵤₚ if X_{q}>0, and the sign of this operation, namely sign(X_{q}-X), is used for phase detection output derivation. It should be noted that the PD outer levels need not to be equal to the ADC output levels -3 and +3 in order to allow the sampling phase to be adjusted.

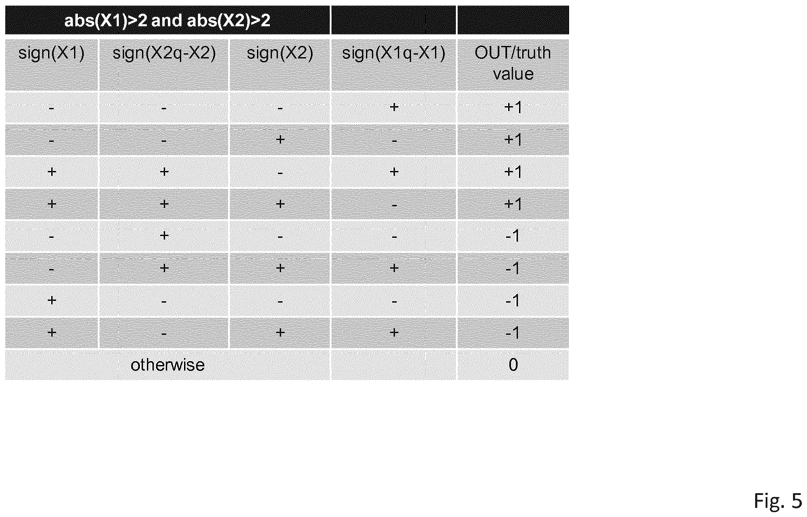

Fig. 5 shows a truth table of a phase detector according to a second embodiment of the present invention. The signal output from the output "OUT" of the phase detector, which corresponds to a truth value amongst -1, 0 and +1, may then be filtered through a filter such as a low pass filter (LPF) and used to drive a clock oscillator such as a voltage-controlled oscillator (VCO). The operations defined in the truth table are performed by digital blocks. Provided that the absolute values of two consecutive analog data of the M-level signal sampled at a distance of one symbol period with respect to each other are strictly larger than 2, i.e., abs(X₁)>2 and abs(X₂)>2, it can be gathered from the truth table that sign(X₁) and sign(X₂) correspond to the respective polarity or sign of X1 and X2, X_{1q} denotes X_{q} referring to X₁, X_{2q} denotes X_{q} referring to X₂, sign(X₁-X_{1q}) refers to X₁ and corresponds to the polarity or sign of the difference X₁-X_{1q}, and sign(X₂-X_{2q}) refers to X₂ and corresponds to the polarity or sign of the difference X₂-X_{2q}.

The PD outer levels controlling the sampling phase are optimized in a dithering mode and the best sampling phase (BSP) corresponding to the minimum number of corrected bits output from a FEC block is found. The PD outer levels can also be controlled in order to optimize the PD performance in terms of gain and jitter.

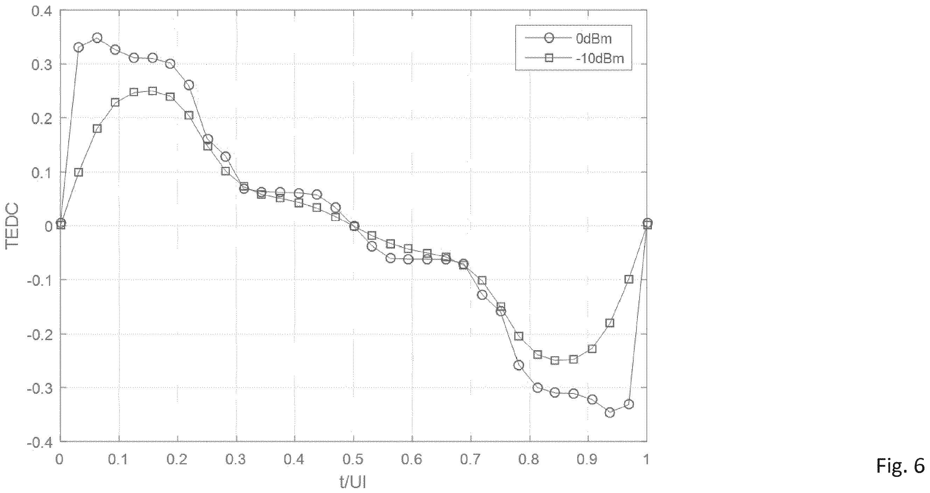

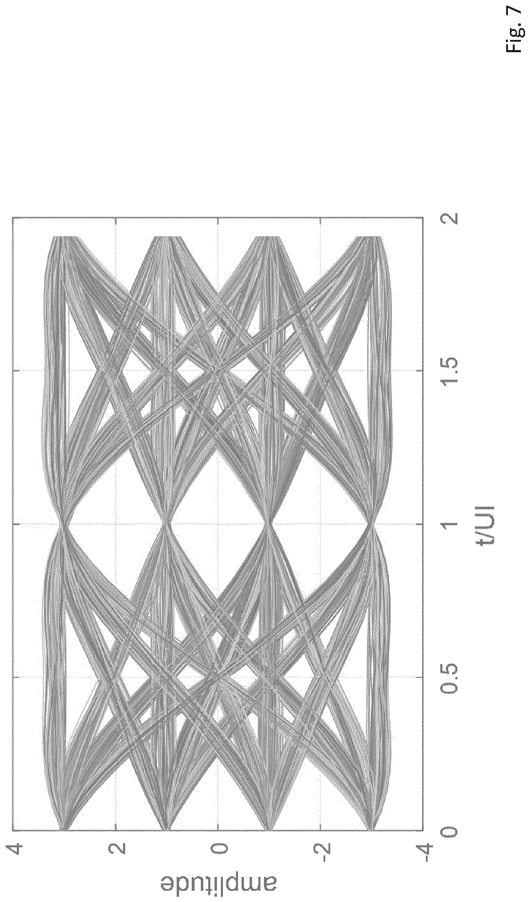

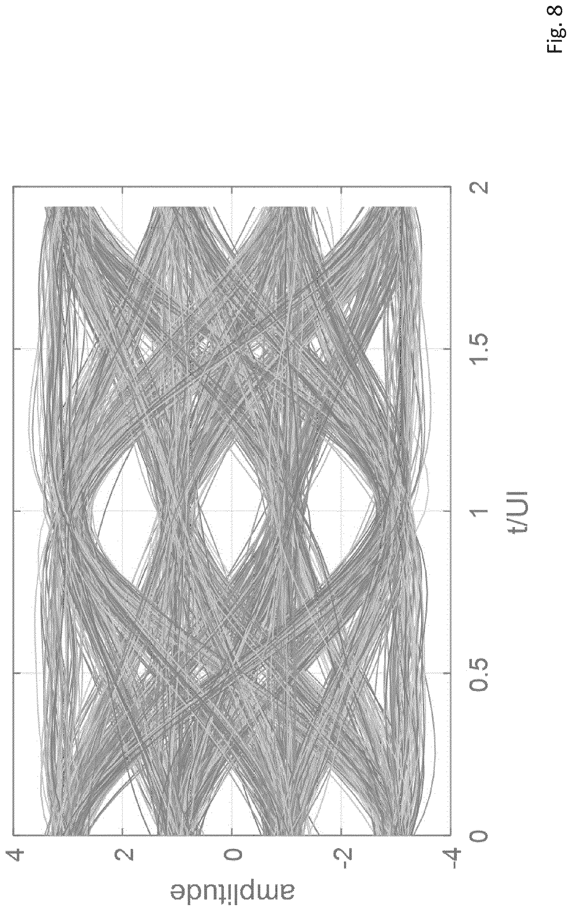

A 28GBd PAM-4 system (as shown in Fig. 1) with an externally modulated laser (EML) has been simulated. TEDC has been tested in links without chromatic dispersion, with enough bandwidth, and with equalization. Only the receiver (Rx) input power has been varied. As can be seen in the diagram of Fig. 6 showing TEDC versus a normalized time (t/UI) at two Rx input powers, i.e., at Pin=0dBm and Pin=-10dBm, it could be verified that the TEDC was not significantly affected by a power reduction of 10dBm. The curve is symmetric and without the hang-up region (only at 180° phase). Figs. 7 and 8 show the corresponding eye diagrams at the respective Rx input powers of 0dBm and -10dBm.

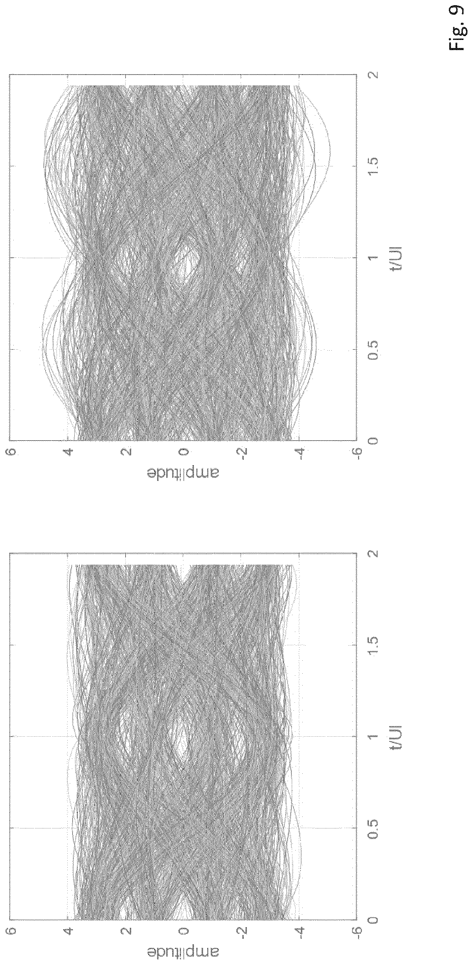

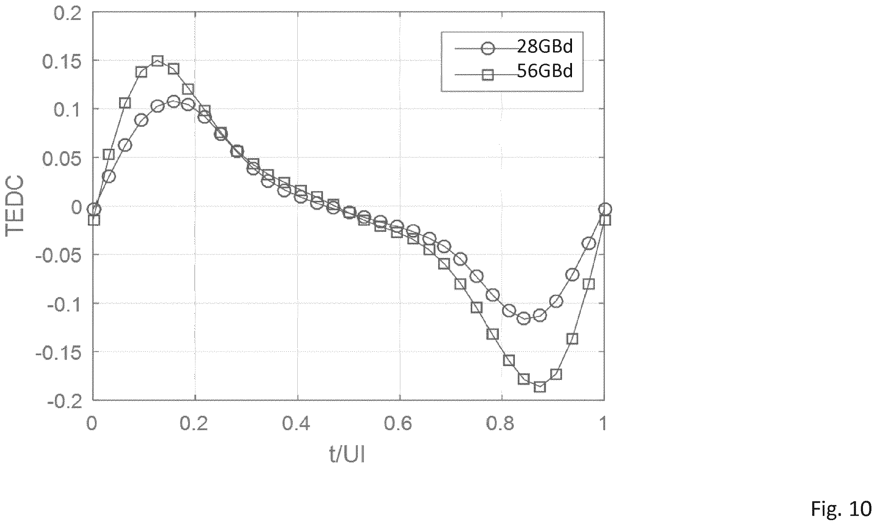

The system with EML shown in Fig. 1 is experimentally verified at 28GBd and 56GBd at the received powers corresponding to a BER of 0.004. The received PAM-4 signal is equalized by a FIR filter before the CDR block in order to get a PAM-4 signal with less inter-symbol interference (ISI). Eye diagrams after equalization are shown in Fig. 9 for a Pin of -10 and -4dBm in 28GBd and 56GBd systems, respectively. The TEDC of those two systems are presented in Fig. 10. As can be seen therefrom, the 56GBd system has a better TEDC (i.e., a higher PD gain) and also less jitter, although not presented herein, because of the existence of stronger signals above the level +3 and below the level -3.

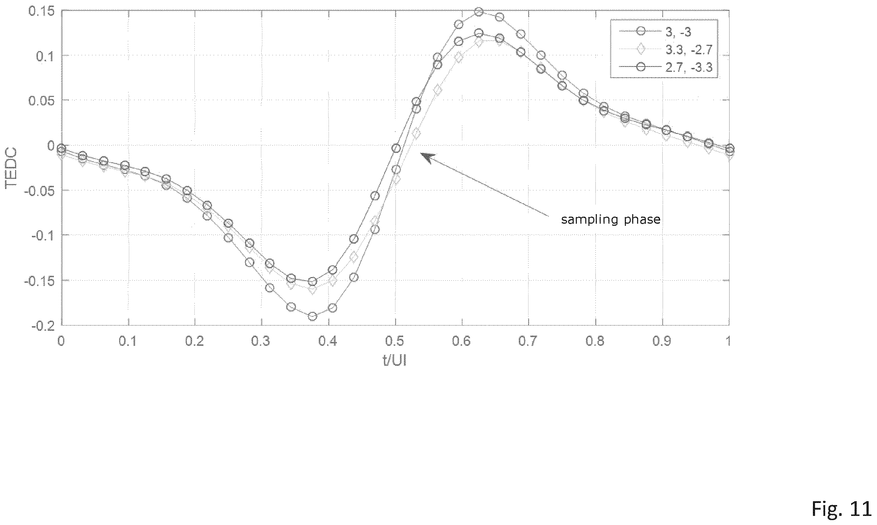

The previous 56GBd data is used to demonstrate the sampling phase adjustment (SPA) by controlling the PD thresholds. To that extent, Fig. 11 shows TEDC versus a normalized time (t/UI) for different pairs of thresholds, i.e., for (+3; -3), (+3.3; -2.7) and (+2.7; -3.3). The optimum sampling phase is equal to 0 and TEDC with the thresholds +3 and -3 provides a sampling phase that is slightly shifted towards the right with respect to said optimum sampling phase. The thresholds +3.3 and -2.7 also shift the TEDC towards the right with respect to said optimum sampling phase. Indeed, a better sampling phase is achieved by the thresholds +2.7 and -3.3. However, moving the sampling phase may increase the jitter, so that a trade-off between these two effects must be considered. For example, the thresholds +2.9 and -2.9 do not change the sampling phase but improve the clock performance by providing a higher PD gain and less self-jitter.

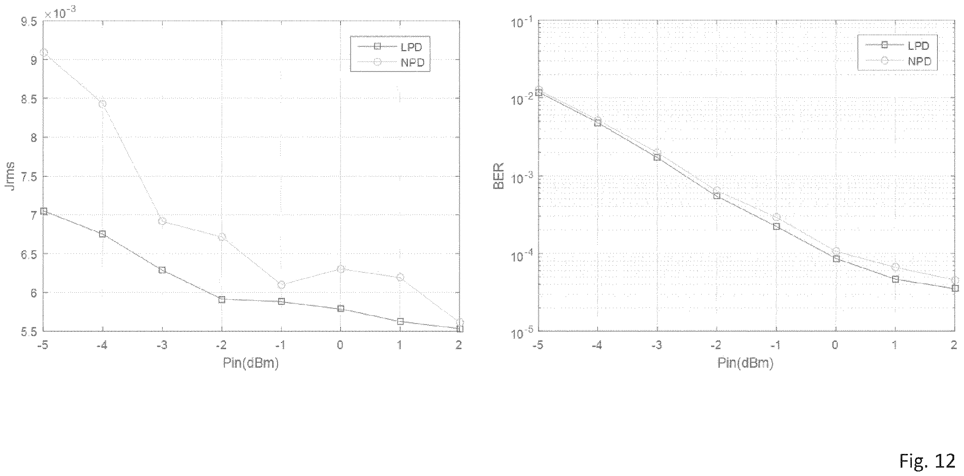

In a 56GBd experiment with a 4MHz phase-locked loop (PLL) bandwidth and as shown in Fig. 12, the performance of the proposed phase detector (hereafter denoted by NPD) according to an embodiment of the present invention has been compared to a conventional linear phase detector (hereafter denoted by LPD) using an estimated root mean square jitter (Jrms) and a BER. As can be seen in Fig. 12(a) showing the characteristics of Jrms versus the input power (Pin), the NPD introduces more jitter than the LPD. As can be seen in Fig. 12(b) showing the characteristics of BER versus the input power (Pin), the NPD is more susceptible to BER degradation than the LPD. However, the jitter degradation is not so serious and cannot cause such a BER degradation, so that it likely comes from the sampling phase.

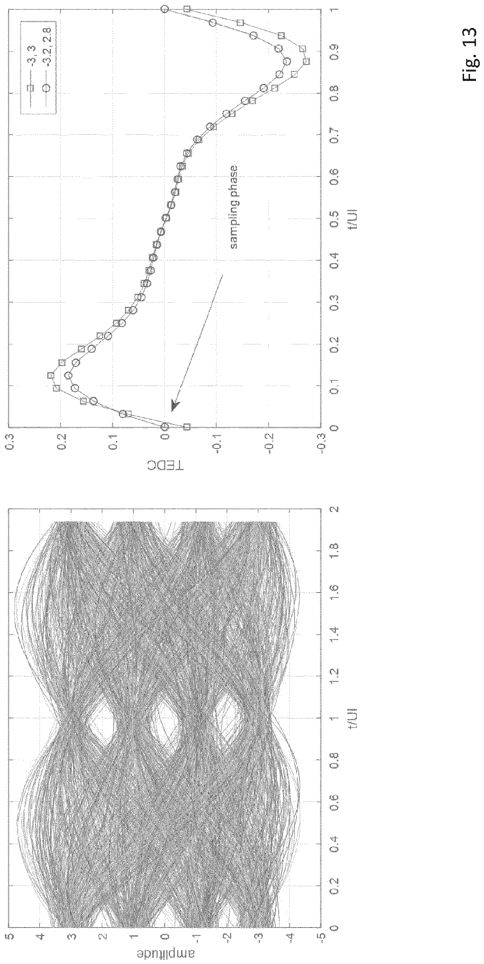

In the above 56GBd experiment and as shown in Fig. 13, the performance of the NPD according to an embodiment of the present invention has been assessed using (a): an eye diagram at a Pin of 2dBm and (b): TEDC versus a normalized time (t/UI) for two pairs of PD thresholds. As can be seen in Fig. 13(a), the eye diagram is skewed since the upper eye is slightly shifted towards the left whereas the lower eye is moved towards the right. Moreover, the TEDC diagram shown in Fig. 13(b) for the default PD thresholds +3 and -3 indicates that the sampling phase will be shifted by about 0.02UI, thereby causing a BER degradation. Nevertheless, Fig. 13(b) also shows that the TEDC is getting shifted towards the left at the exact position corresponding to the best BER by setting the two PD thresholds to optimized thresholds +2.8 and -3.2.

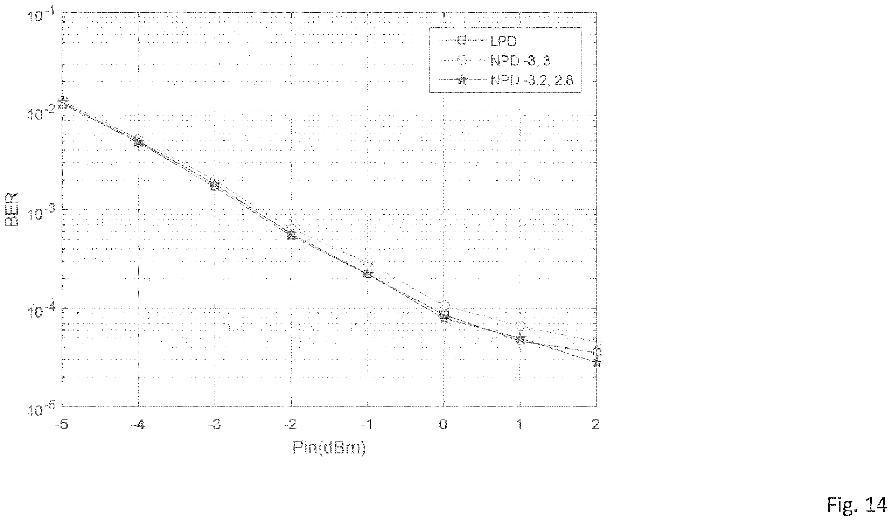

Fig. 14 shows a comparative BER performance between the default and optimized NPD thresholds with respect to the LPD thresholds. The BER performance of the NPD with optimized thresholds (i.e., +2.8 and -3.2) and LPD is almost the same. No performance degradation with the NPD, which works only with a single sample per symbol and uses MSBs and the signs of quantization errors with the optimum PD thresholds, can be observed.

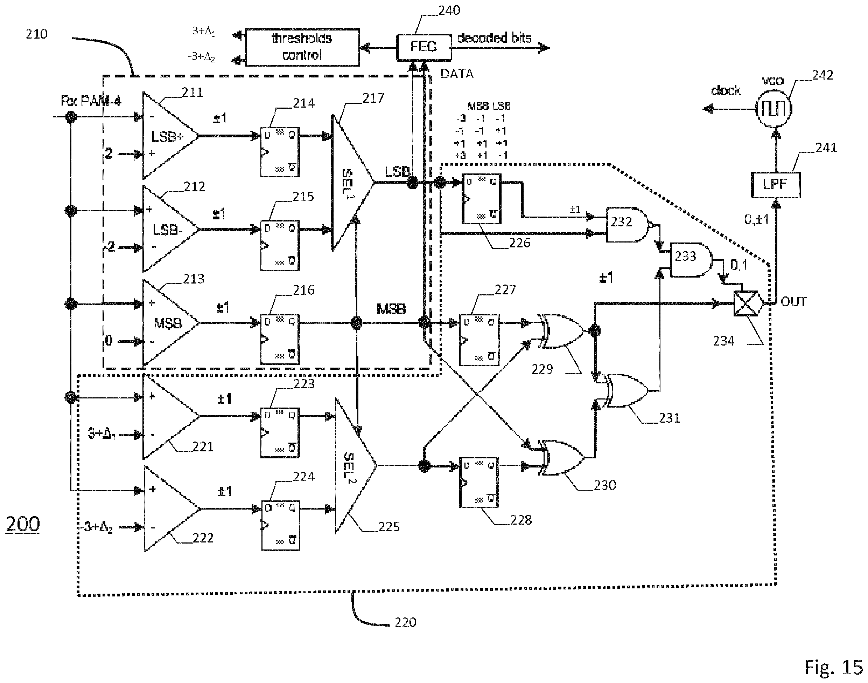

Fig. 15 shows a schematic block diagram of the proposed clock and data recovery (CDR) device 200 according to an embodiment of the present invention.

The proposed CDR device 200 according to the embodiment comprises a PAM-4 2-bit ADC 210 and a phase detector (PD) 220.

The input of the CDR device 200 receives a PAM-4 signal (Rx PAM-4), which is identically provided to three voltage comparators 211-213 of the PAM-4 2-bit ADC 210 and two voltage comparators 221-222 of the PD 220.

The first voltage comparator 211 compares a first amplitude difference corresponding to an amplitude difference between an analog data (X) of the PAM-4 signal and a voltage threshold equal to +2 as to output the least significant bit (LSB+, ±1) corresponding to the polarity (±) or sign (±) of the first amplitude difference.

The second voltage comparator 212 compares a second amplitude difference corresponding to an amplitude difference between the analog data (X) of the PAM-4 signal and a voltage threshold equal to -2 as to output the least significant bit (LSB-, ±1) corresponding to the polarity (±) or sign (±) of second amplitude difference.

The third voltage comparator 213 compares a third amplitude difference corresponding to an amplitude difference between the analog data (X) of the PAM-4 signal and a voltage threshold equal to 0 as to output the most significant bit (MSB, ±1) corresponding to the polarity (±) or sign (±) of the third amplitude difference.

The output (LSB+, LSB-, MSB) of each of these voltage comparators 211-213 is temporarily stored in respective D-type flip-flops 214-216, to which they are connected. Afterwards, the output (MSB) of the third voltage comparator 213 selects, through a first selector 217, the correct outer level bit (OLB, ±1), which specifically corresponds to a least significant bit (LSB, ±1) in the case of a 2-bit ADC, amongst LSB+ and LSB-, namely the outer level bit (OLB, ±1) corresponding to the polarity (±) or sign (±) of the amplitude difference between the analog data (X) of the PAM-4 signal and the closest voltage threshold amongst -2 and +2. Thereby, the PAM-4 2-bit ADC 210 can output a 2-bit data (DATA: MSB, LSB/OLB) according to the truth table depicted above the D-type flip-flop 226. It should be noted that the first voltage comparator 211 is connected in an inverting mode as to invert its output and thus generate a Gray encoded signal.

The fourth voltage comparator 221 compares a fourth amplitude difference corresponding to an amplitude difference between the analog data (X) of the PAM-4 signal and a first controllable threshold value (X_{q}=Xᵤₚ) whose amplitude is equal to a sum of +3 and a first quantization value (Δ1).

The fifth voltage comparator 222 compares a fifth amplitude difference corresponding to an amplitude difference between the analog data (X) of the PAM-4 signal and a second controllable threshold value (X_{q}=X_{down}) whose amplitude is equal to a sum of -3 and a second quantization value (Δ2).

The first and second controllable threshold values (Xᵤₚ, X_{down}) are controlled by using, for example, an outer decoder such as a FEC 240 or some known training sequence during the calibration phase, in order to minimize the BER, and adjusted accordingly as to obtain optimized threshold values. The optimization process of the thresholds can be performed through a PD optimization and/or a sampling phase optimization. In the PD optimization, the first and second controllable threshold values (Xᵤₚ, X_{down}) are firstly varied in opposite directions until reaching the optimum PD performance (i.e., minimum BER after FEC 240). In this way, the sampling phase does not vary while the PD gain and jitter are controlled. The optimized threshold values can then be -2.9, which is obtained by increasing -3, and +2.9, which is obtained by decreasing +3. In the sampling phase optimization, the first and second controllable threshold values (Xᵤₚ, X_{down}) are firstly varied in same directions until reaching the optimum PD performance (i.e., minimum BER after FEC 240). In this way, the sampling phase varies together with the PD gain and jitter. The optimized threshold values can then be -2.7, which is obtained by increasing -3, and +3.3, which is obtained by increasing +3.

The output of each of these fourth and fifth voltage comparators 221, 222 is temporarily stored in respective D-type flip-flops 223, 224, to which they are connected. Afterwards, the output (MSB) of the third voltage comparator 213 selects, through a second selector 225, a polarity (±) or sign (±) of the smallest amplitude absolute difference amongst the fourth amplitude difference and the fifth amplitude difference.

Furthermore, some D-type flip-flops 226-228 and logical blocks 229-233 are added to generate the PD output (OUT) through a three-value logic unit 234, which outputs a truth value amongst -1, 0 and +1 according to the truth table of Fig. 5.

More specifically, the three-value logic unit 234 provides the digital output "±1" of the XOR gate 229 if the output of the AND gate 233 is in an active state corresponding to "1", and provides the digital output "0" of the XOR gate 229 if the output of the AND gate 233 is in an inactive state corresponding to "0". Thus, the logical output "0" of the AND gate 233 reflects the last row denoted "otherwise" in the truth table of Fig. 5. The XOR gate 229, with its two input signals corresponding to MSB and the selected amplitude difference amongst the first and second amplitude differences, reflects the remaining upper eight rows of the truth table in Fig. 5.

Thus, all blocks after the five voltage comparators 211-213 and 221-222 are digital.

The PD output (OUT) is then filtered through a filter such as a low-pass filter (LPF) 241 and used for driving a voltage-controlled oscillator (VCO) 242.

Although the present invention has been specifically described in connection with a PAM-4 transmission system, it should be noted that the present invention can be used in any multi-level transmission systems with M levels, where M is a positive integer and a power of two. By generalizing to M levels, the clock and data recovery (CDR) apparatus would comprise an M-level log₂(M)-bit ADC consisting of (2^{*log*₂(*M*)} - 1) voltage comparators. For example, it could be implemented in a PAM-8 transmission system with M=8 levels denoted -7,-5,-3, -1, +1, +3, +5, and +7, wherein all samples that would be in the range of amplitude level from "-6" to "+6" would be discarded. The block diagram of Fig. 15, which is valid for M=4, would then have to be modified for M=8. In particular, the PAM-4 2-bit ADC 210 would be replaced by a PAM-8 3-bit ADC consisting of seven comparators, and the outer levels +2 and -2 of the corresponding comparators 211 and 212 would be respectively replaced by the outer levels +6 and -6. In addition, the PAM-8 3-bit ADC would output a 3-bit data (DATA) according to the following truth table:

| DATA | bit1 | bit2 | bit3 |
|---|---|---|---|
| -7 | -1 | -1 | -1 |
| -5 | -1 | -1 | +1 |
| -3 | -1 | +1 | +1 |
| -1 | -1 | +1 | -1 |
| +1 | +1 | +1 | -1 |
| +3 | +1 | +1 | +1 |
| +5 | +1 | -1 | +1 |
| +7 | +1 | -1 | -1 |

As already mentioned, one comparator output in Fig. 15 can be inverted due to Gray mapping of the PAM-4 signal, and this is efficiently used for the Gray decoding and the logic enabling the detection of signals below the level -2 and above the level +2. In the case of a PAM-8 transmission system, more comparator outputs should be inverted when the Gray decoding is performed. The corresponding Gray codes would be then: "000", "001", "011", "010", "110", 111", "101" and "100".

Regarding the phase detector, the first controllable threshold value Xᵤₚ would have an amplitude equal to a sum of +7 and a first quantization value (Δ1), and the second controllable threshold value X_{down} would have an amplitude equal to a sum of -7 and a second quantization value (Δ2).

The same logical circuitry would be used, so that all D-type flip-flops, all logical blocks and the three-valued logic unit would remain unchanged.

In summary, the present invention relates to an apparatus and method for recovering clock and data from an M-level signal of a receiver in a transmission system, M being a positive integer and a power of two, wherein an outer level bit (OLB) corresponding to a polarity (±) or sign (±) of an amplitude difference between an analog data (X) of the M-level signal and a closest voltage threshold amongst 2-M and M-2 is output, the most significant bit (MSB) corresponding to a polarity (±) or sign (±) of an amplitude difference between the analog data (X) of the M-level signal and a voltage threshold equal to zero is output, a first amplitude difference between the analog data (X) and a first controllable threshold value (Xᵤₚ) is compared, a second amplitude difference between the analog data (X) and a second controllable threshold value (X_{down}) is compared, a truth value amongst -1, 0 and +1, based on a polarity (±) or sign (±) of the most significant bit (MSB), a polarity of the outer level bit (OLB) and a polarity of an amplitude difference to be selected amongst the first and second amplitude differences is output through a truth table, and two consecutive analog data (X₁, X₂) of the M-level signal are sampled at a distance of one symbol period with respect to each other.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to a person skilled in the art. Such modifications may involve other features, which are already known in the art and may be used instead of or in addition to features already described herein. In particular, the present invention can be applied to any multilevel transmission system. More specifically, the transmission system is not restricted to an optical transmission system. Rather, the present invention can be applied to any wired or wireless coherent or non-coherent transmission system. The transmitter and receiver device of the proposed system can be implemented in discrete hardware or based on software routines for controlling signal processors at the transmission and reception side.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

Although the present invention has been described with reference to specific features and embodiments thereof, it is evident that various modifications and combinations can be made thereto without departing from the scope of the invention. The specification and drawings are, accordingly, to be regarded simply as an illustration of the invention as defined by the appended claims, and are contemplated to cover any and all modifications, variations, combinations or equivalents that fall within the scope of the present invention.

## Claims

1. An apparatus for recovering clock and data from an M-level signal of a receiver in a transmission system, M being a positive integer and a power of two and at least 4, the apparatus comprising:
- an M-level log₂(M)-bit analog-to-digital converter, ADC, connected at an input of the apparatus, the M-level log₂(M)-bit ADC being adapted to output an outer level bit, OLB, corresponding to a polarity (+, -) of an amplitude difference between an analog data (X) of the M-level signal and a closest value in the range of voltage threshold from 2-M to M-2 and adapted to output the most significant bit, MSB, corresponding to a polarity (+, -) of an amplitude difference between the analog data (X) of the M-level signal and a voltage threshold equal to zero;
- a first voltage comparator connected at the input of the apparatus, the first voltage comparator being adapted to compare a first amplitude difference corresponding to an amplitude difference between the analog data (X) and a first controllable threshold value (Xᵤₚ), wherein the first controllable threshold value (Xᵤₚ) has an amplitude equal to a sum of M-1 and a first quantization value (Δ₁);
- a second voltage comparator connected at the input of the apparatus, the second comparator being adapted to compare a second amplitude difference corresponding to an amplitude difference between the analog data (X) and a second controllable threshold value (X_{down}), wherein the second controllable threshold value (X_{down}) has an amplitude equal to a sum of 1-M and a second quantization value (Δ₂); and
- a three-valued logic unit adapted to generate a phase detection output, through a truth table, which outputs a truth value amongst -1, 0 and +1, based on a polarity (+, -) of the MSB, a polarity of the OLB, and a polarity of an amplitude difference to be selected amongst the first and second amplitude differences,
- a filter adapted to filter the truth value (0, ±1) output from the three-value logic unit; and
- an oscillator adapted to receive the filtered truth value (0, ±1) and generate a clock signal to be provided to the M-level log₂(M)-bit ADC,
wherein:
- two consecutive analog data (X₁, X₂) of the M-level signal are sampled at a distance of one symbol period with respect to each other.

2. The apparatus of claim 1, wherein the M-level signal has M equidistant levels, the M levels being odd integers starting from ±1, and the analog data (X) has an amplitude outside the range from 2-M to M-2.

3. The apparatus of claim 1 or 2, wherein the first and second controllable threshold values (Xᵤₚ, X_{down}) are controlled in order to minimize a bit error rate, BER.

4. The apparatus of claim 3, wherein the first and second controllable threshold values (Xᵤₚ, X_{down}) being controlled by adjusting the first and second quantization values (Δ₁, Δ₂).

5. The apparatus of claim 4, wherein the first and second quantization values (Δ₁, Δ₂) are adjusted so as to have the first and second controllable threshold values (Xᵤₚ, X_{down}) varying in a reverse direction or in a same direction.

6. The apparatus of any one of the preceding claims, wherein the selected amplitude difference is the smallest amplitude absolute difference amongst the first amplitude absolute difference and the second amplitude absolute difference.

7. The apparatus of claim 6, wherein the amplitude difference selection is performed by the MSB.

8. The apparatus of claim 7, wherein an output signal of the three-valued logic unit is given by the following truth table provided that abs(X₁)> M-2 and abs(X₂)> M-2 and M=4:
| sign(X₁) | sign(X_{2q}-X₂) | sign(X₂) | sign(X_{1q}-X₁) | OUT/truth value |
|---|---|---|---|---|
| - | - | - | + | +1 |
| - | - | + | - | +1 |
| + | + | - | + | +1 |
| + | + | + | - | +1 |
| - | + | - | - | -1 |
| - | + | + | + | -1 |
| + | - | - | - | -1 |
| + | - | + | + | -1 |
| otherwise | | | | 0 |
where X₁ and X₂ are two consecutive analog data of the M-level signal sampled at a distance of one symbol period with respect to each other, sign(X₁) and sign(X₂) correspond to the polarity of their respective MSB, X_{1q} refers to X₁ and is a threshold value amongst the first and second controllable threshold values (Xᵤₚ, X_{down}), X_{2q} refers to X₂ and is a threshold value amongst the first and second controllable threshold values (Xᵤₚ, X_{down}), sign(X₁-X_{1q}) refers to X₁ and corresponds to the polarity of the selected amplitude difference amongst the first and second amplitude differences, and sign(X₂-X_{2q}) refers to X₂ and corresponds to the polarity of the selected amplitude difference amongst the first and second amplitude differences.

9. The apparatus of any one of the preceding claims, wherein the M-level signal is an M-pulse amplitude modulation, PAM, signal.

10. The apparatus of claim 9, wherein the OLB is a least significant bit, LSB, when M equals four.

11. A method performed by an apparatus, for recovering clock and data from an M-level signal of a receiver in a transmission system, M being a positive integer and a power of two and at least 4, the method comprising:
- outputting an outer level bit, OLB, corresponding to a polarity (+, -) of an amplitude difference between an analog data (X) of the M-level signal and a closest value in the range of voltage threshold from 2-M to M-2;
- outputting the most significant bit, MSB, corresponding to a polarity (+, -) of an amplitude difference between the analog data (X) of the M-level signal and a voltage threshold equal to zero;
- comparing a first amplitude difference between the analog data (X) and a first controllable threshold value (Xᵤₚ), wherein the first controllable threshold value (Xᵤₚ) has an amplitude equal to a sum of M-1 and a first quantization value (Δ₁);
- comparing a second amplitude difference between the analog data (X) and a second controllable threshold value (X_{down}), wherein the second controllable threshold value (X_{down}) has an amplitude equal to a sum of 1-M and a second quantization value (Δ₂); and
- generating a phase detection output, through a truth table, which outputs a truth value amongst -1, 0 and +1, based on a polarity (+,-) of the MSB, a polarity of the OLB and a polarity of an amplitude difference to be selected amongst the first and second amplitude differences,
- filtering the truth value (0, ±1);
- receiving the filtered truth value (0, ±1); and
- generating a clock signal based on the received filtered truth value (0, ±1),
wherein:
- two consecutive analog data (X₁, X₂) of the M-level signal are sampled at a distance of one symbol period with respect to each other.

12. A computer program comprising a program code comprising instructions, which when executed by a computer, cause the computer to perform the method according to claim 11.

## Patentansprüche

1. Vorrichtung zur Takt- und Datenrückgewinnung aus einem M-Pegelsignal eines Empfängers in einem Übertragungssystem, wobei M eine positive ganze Zahl und eine Potenz von zwei ist und mindestens 4 ist, wobei die Vorrichtung umfasst:
- einen M-Pegel-log₂(M)-Bit-Analog-Digital-Wandler, ADC, der mit einem Eingang der Vorrichtung verbunden ist, wobei der M-Pegel-log₂(M)-Bit-ADC geeignet ist zum Ausgeben eines äußeren Pegelbits (Outer Level Bit, OLB), das einer Polarität (+, -) einer Amplitudendifferenz zwischen einem analogen Datum (X) des M-Pegelsignals und einem nächsten Wert in dem Bereich eines Spannungsschwellenwerts von 2 - M bis M - 2 entspricht, und geeignet ist zum Ausgeben des höchstwertigen Bits (Most Significant Bit, MSB), das einer Polarität (+, -) einer Amplitudendifferenz zwischen dem analogen Datum (X) des M-Pegelsignals und einem Spannungsschwellenwert gleich null entspricht;
- einen ersten Spannungskomparator, der mit dem Eingang der Vorrichtung verbunden ist, wobei der erste Spannungskomparator geeignet ist zum Vergleichen einer ersten Amplitudendifferenz, die einer Amplitudendifferenz zwischen dem analogen Datum (X) und einem ersten steuerbaren Schwellenwert (Xᵤₚ) entspricht, wobei der erste steuerbare Schwellenwert (Xᵤₚ) eine Amplitude aufweist, die gleich einer Summe von M - 1 und einem ersten Quantisierungswert (Δ₁) ist;
- einen zweiten Spannungskomparator, der mit dem Eingang der Vorrichtung verbunden ist, wobei der zweite Spannungskomparator geeignet ist zum Vergleichen einer zweiten Amplitudendifferenz, die einer Amplitudendifferenz zwischen dem analogen Datum (X) und einem zweiten steuerbaren Schwellenwert (X_{down}) entspricht, wobei der zweite steuerbare Schwellenwert (X_{down}) eine Amplitude aufweist, die gleich einer Summe von (1 - M) und einem zweiten Quantisierungswert (Δ₂) ist; und
- eine dreiwertige Logikeinheit, die geeignet ist zum Erzeugen einer Phasenerkennungsausgabe, durch eine Wahrheitstabelle, die einen Wahrheitswert aus -1, 0 und +1 aufgrund einer Polarität (+, -) des MSB, einer Polarität des OLB und einer Polarität einer Amplitudendifferenz ausgibt, die aus der ersten und der zweiten Amplitudendifferenz ausgewählt werden muss,
- einen Filter, der geeignet ist zum Filtern des Wahrheitswertes (0, ±1), der von der dreiwertigen Logikeinheit ausgegeben wird; und
- einen Oszillator, der geeignet ist zum Empfangen des gefilterten Wahrheitswertes (0, ±1) und zum Erzeugen eines Taktsignals, das dem M-Pegel-log₂(M)-bit-ADC bereitgestellt wird,
wobei:
- zwei aufeinanderfolgende analoge Daten (X₁, X₂) des M-Pegelsignals in einem Abstand von einer Symbolperiode in Bezug zueinander abgetastet werden.

2. Vorrichtung nach Anspruch 1, wobei das M-Pegelsignal M äquidistante Pegel aufweist, wobei die M Pegel ungerade ganze Zahlen beginnend bei ±1 sind und wobei das analoge Datum (X) eine Amplitude außerhalb des Bereichs von 2 - M bis M - 2 aufweist.

3. Vorrichtung nach Anspruch 1 oder 2, wobei der erste und der zweite steuerbare Schwellenwert (Xᵤₚ, X_{down}) gesteuert werden, um eine Bitfehlerrate (Bit Error Rate, BER) zu minimieren.

4. Vorrichtung nach Anspruch 3, wobei der erste und der zweite steuerbare Schwellenwert (Xᵤₚ, X_{down}) gesteuert werden, indem der erste und der zweite Quantisierungswert (Δ₁, Δ₂) angepasst werden.

5. Vorrichtung nach Anspruch 4, wobei der erste und der zweite Quantisierungswert (Δ₁, Δ₂) so angepasst werden, dass der erste und der zweite steuerbare Schwellenwert (Xᵤₚ, X_{down}) in einer entgegengesetzten Richtung oder in einer gleichen Richtung variiert werden.

6. Vorrichtung nach einem der vorhergehenden Ansprüche, wobei die ausgewählte Amplitudendifferenz die kleinste absolute Amplitudendifferenz aus der ersten absoluten Amplitudendifferenz und der zweiten absoluten Amplitudendifferenz ist.

7. Vorrichtung nach Anspruch 6, wobei die Amplitudendifferenzauswahl durch das MSB durchgeführt wird.

8. Vorrichtung nach Anspruch 7, wobei ein Ausgangssignal der dreiwertigen Logikeinheit durch die folgende Wahrheitstabelle gegeben ist, vorausgesetzt, dass abs(X₁) > M - 2 und abs(X₂) > M - 2 und M = 4 ist:
| sign(X₁) | sign(X_{2q} - X₂) | sign(X₂) | sign(X_{1q} - X₁) | AUSGABE/ Wahrheitswert |
|---|---|---|---|---|
| - | - | - | + | +1 |
| - | - | + | - | +1 |
| + | + | - | + | +1 |
| + | + | + | - | +1 |
| - | + | - | - | -1 |
| - | + | + | + | -1 |
| + | - | - | - | -1 |
| + | - | + | + | -1 |
| andernfalls | | | | 0 |
wobei X₁ und X₂ zwei aufeinanderfolgende analoge Daten des M-Pegelsignals sind, die in einem Abstand von einer Symbolperiode zueinander abgetastet werden, sign(X₁) und sign(X₂) der Polarität ihres jeweiligen MSB entsprechen, sich X_{1q} auf X₁ bezieht und ein Schwellenwert aus dem ersten und dem zweiten steuerbaren Schwellenwert (Xᵤₚ, X_{down}) ist, sich X_{2q} auf X₂ bezieht und ein Schwellenwert aus dem ersten und dem zweiten steuerbaren Schwellenwert (Xᵤₚ, X_{down}) ist, sich sign(X₁ - X_{1q}) auf X₁ bezieht und der Polarität der aus der ersten und der zweiten Amplitudendifferenz ausgewählten Amplitudendifferenz entspricht, und sich sign(X₂ - X_{2q}) auf X₂ bezieht und der Polarität der aus der ersten und der zweiten Amplitudendifferenz ausgewählten Amplitudendifferenz entspricht.

9. Vorrichtung nach einem der vorhergehenden Ansprüche, wobei das M-Pegelsignal ein M-Puls-Amplitudenmodulationssignal (M-Pulse Amplitude Modulation signal, PAM-Signal) ist.

10. Vorrichtung nach Anspruch 9, wobei das OLB ein niedrigstwertiges Bit (Least Significant Bit, LSB) ist, wenn M gleich vier ist.

11. Verfahren, das durch eine Vorrichtung zur Takt- und Datenrückgewinnung aus einem M-Pegelsignal eines Empfängers in einem Übertragungssystem durchgeführt wird, wobei M eine positive ganze Zahl und eine Potenz von zwei ist und mindestens 4 ist, wobei das Verfahren umfasst:
- Ausgeben eines äußeren Pegelbits (Outer Level Bit, OLB), das einer Polarität (+, -) einer Amplitudendifferenz zwischen einem analogen Datum (X) des M-Pegelsignals und einem nächsten Wert in dem Bereich eines Spannungsschwellenwerts von 2 - M bis M - 2 entspricht;
- Ausgeben eines höchstwertigen Bits (Most Significant Bit, MSB), das einer Polarität (+, -) einer Amplitudendifferenz zwischen dem analogen Datum (X) des M-Pegelsignals und einem Spannungsschwellenwert gleich null entspricht;
- Vergleichen einer ersten Amplitudendifferenz zwischen dem analogen Datum (X) und einem ersten steuerbaren Schwellenwert (Xᵤₚ), wobei der erste steuerbare Schwellenwert (Xᵤₚ) eine Amplitude aufweist, die gleich einer Summe von M - 1 und einem ersten Quantisierungswert (Δ₁) ist;
- Vergleichen einer zweiten Amplitudendifferenz zwischen dem analogen Datum (X) und einem zweiten steuerbaren Schwellenwert (X_{down}), wobei der zweite steuerbare Schwellenwert (X_{down}) eine Amplitude aufweist, die gleich einer Summe von 1 - M und einem zweiten Quantisierungswert (Δ₂) ist; und
- Erzeugen einer Phasenerkennungsausgabe, durch eine Wahrheitstabelle, die einen Wahrheitswert aus -1, 0 und +1 aufgrund einer Polarität (+, -) des MSB, einer Polarität des OLB und einer Polarität einer Amplitudendifferenz ausgibt, die aus der ersten und der zweiten Amplitudendifferenz ausgewählt werden muss,
- Filtern des Wahrheitswertes (0, ±1);
- Empfangen des gefilterten Wahrheitswertes (0, ±1) und
- Erzeugen eines Taktsignals aufgrund des empfangenen gefilterten Wahrheitswertes (0, ±1),
wobei:
- zwei aufeinanderfolgende analoge Daten (X₁, X₂) des M-Pegelsignals in einem Abstand von einer Symbolperiode in Bezug zueinander abgetastet werden.

12. Computerprogramm, das einen Programmcode umfasst, der Befehle umfasst, die, wenn sie von einem Computer ausgeführt werden, den Computer veranlassen, das Verfahren nach Anspruch 11 durchzuführen.

## Revendications

1. Appareil de récupération d'horloge et de données à partir d'un signal de niveau M d'un récepteur dans un système de transmission, M étant un entier positif et une puissance de deux et au moins 4, l'appareil comprenant :
- un convertisseur analogique-numérique, ADC, log₂(M)-bit de niveau M, connecté à une entrée de l'appareil, l'ADC log₂(M)-bit de niveau M étant adapté pour émettre en sortie un bit de niveau extérieur, OLB, correspondant à une polarité (+, -) d'une différence d'amplitude entre une donnée analogique (X) du signal de niveau M et une valeur la plus proche dans la plage de seuil de tension de 2-M à M-2 et adapté pour émettre en sortie le bit le plus significatif, MSB, correspondant à une polarité (+, -) d'une différence d'amplitude entre la donnée analogique (X) du signal de niveau M et un seuil de tension égal à zéro ;
- un premier comparateur de tension connecté à l'entrée de l'appareil, le premier comparateur de tension étant adapté pour comparer une première différence d'amplitude correspondant à une différence d'amplitude entre la donnée analogique (X) et une première valeur de seuil contrôlable (Xᵤₚ), la première valeur de seuil contrôlable (Xᵤₚ) ayant une amplitude égale à une somme de M-1 et d'une première valeur de quantification (Δ₁) ;
- un second comparateur de tension connecté à l'entrée de l'appareil, le second comparateur étant adapté pour comparer une seconde différence d'amplitude correspondant à une différence d'amplitude entre la donnée analogique (X) et une seconde valeur de seuil contrôlable (X_{down}), la seconde valeur de seuil contrôlable (X_{down}) ayant une amplitude égale à une somme de 1-M et d'une seconde valeur de quantification (Δ₂) ; et
- une unité logique à trois valeurs adaptée pour générer une sortie de détection de phase, par l'intermédiaire d'une table de vérité, qui émet en sortie une valeur de vérité parmi -1, 0 et +1, sur la base d'une polarité (+, -) du MSB, d'une polarité de l'OLB, et d'une polarité d'une différence d'amplitude à sélectionner parmi les première et seconde différences d'amplitude,
- un filtre adapté pour filtrer la valeur de vérité (0, ±1) émise en sortie par l'unité logique à trois valeurs ; et
- un oscillateur adapté pour recevoir la valeur de vérité filtrée (0, ±1) et générer un signal d'horloge à fournir à l'ADC log₂(M)-bit à M niveaux,
- deux données analogiques consécutives (X₁, X₂) du signal de niveau M étant échantillonnées à une distance d'une période de symbole l'une par rapport à l'autre.

2. Appareil selon la revendication 1, le signal de niveau M ayant M niveaux équidistants, les M niveaux étant des entiers impairs commençant par ±1, et la donnée analogique (X) ayant une amplitude en dehors de la plage de 2-M à M-2.

3. Appareil selon la revendication 1 ou 2, les première et seconde valeurs de seuil contrôlables (Xᵤₚ, X_{down}) étant contrôlées afin de minimiser un taux d'erreur de bit, BER.

4. Appareil selon la revendication 3, les première et seconde valeurs de seuil contrôlables (Xᵤₚ, X_{down}) étant contrôlées en ajustant les première et seconde valeurs de quantification (Δ₁, Δ₂).

5. Appareil selon la revendication 4, les première et seconde valeurs de quantification (Δ₁, Δ₂) étant ajustées de façon à ce que les première et seconde valeurs de seuil contrôlables (Xᵤₚ, X_{down}) varient dans une direction inverse ou dans une même direction.

6. Appareil selon l'une quelconque des revendications précédentes, la différence d'amplitude sélectionnée étant la plus petite différence absolue d'amplitude parmi la première différence absolue d'amplitude et la seconde différence absolue d'amplitude.

7. Appareil selon la revendication 6, la sélection de la différence d'amplitude étant effectuée par le MSB.

8. Appareil selon la revendication 7, un signal de sortie de l'unité logique à trois valeurs étant donné par la table de vérité suivante à condition que abs(X₁)>M-2 et abs(X₂)>M-2 et M=4 :
| Sign(Xi) | Sign(X_{2q}-X₂) | Sign(X₂) | Sign(X_{1q}-X₁) | Sortie/valeur de vérité |
|---|---|---|---|---|
| - | - | - | + | +1 |
| - | - | + | - | +1 |
| + | + | - | + | +1 |
| + | + | + | - | +1 |
| - | + | - | - | -1 |
| - | + | + | + | -1 |
| + | - | - | - | -1 |
| + | - | + | + | -1 |
| autrement | | | | 0 |
X₁ et X₂ étant deux données analogiques consécutives du signal de niveau M échantillonnées à une distance d'une période de symbole l'une par rapport à l'autre, sign(X₁) et sign(X₂) correspondant à la polarité de leur MSB respectif, X_{1q} faisant référence à X₁ et étant une valeur de seuil parmi les première et seconde valeurs de seuil contrôlables (Xᵤₚ, X_{down}), X_{2q} faisant référence à X₂ et étant une valeur de seuil parmi les première et seconde valeurs de seuil contrôlables (Xᵤₚ, X_{down}), sign(X₁-X_{1q}) faisant référence à X₁ et correspondant à la polarité de la différence d'amplitude sélectionnée parmi les première et seconde différences d'amplitude, et sign(X₂-X_{2q}) faisant référence à X₂ et correspondant à la polarité de la différence d'amplitude sélectionnée parmi les première et seconde différences d'amplitude.

9. Appareil selon l'une quelconque des revendications précédentes, le signal de niveau M étant un signal de modulation d'amplitude d'impulsion M, PAM

10. Appareil selon la revendication 9, l'OLB étant un bit de poids faible, LSB, lorsque M est égal à quatre.

11. Procédé réalisé par un appareil, de récupération d'horloge et de données à partir d'un signal de niveau M d'un récepteur dans un système de transmission, M étant un entier positif et une puissance de deux et au moins 4, le procédé comprenant :
- l'émission en sortie d'un bit de niveau extérieur, OLB, correspondant à une polarité (+, -) d'une différence d'amplitude entre une donnée analogique (X) du signal de niveau M et une valeur la plus proche dans la plage de seuil de tension de 2-M à M-2 ;
- l'émission en sortie du bit le plus significatif, MSB, correspondant à une polarité (+, -) d'une différence d'amplitude entre la donnée analogique (X) du signal de niveau M et un seuil de tension égal à zéro ;
- la comparaison d'une première différence d'amplitude entre la donnée analogique (X) et une première valeur de seuil contrôlable (Xᵤₚ), la première valeur de seuil contrôlable (Xᵤₚ) ayant une amplitude égale à une somme de M-1 et d'une première valeur de quantification (Δ₁);
la comparaison d'une seconde différence d'amplitude entre la donnée analogique (X) et une seconde valeur de seuil contrôlable (X_{down}), la seconde valeur de seuil contrôlable (X_{down}) ayant une amplitude égale à une somme de 1-M et d'une seconde valeur de quantification (Δ₂), et
- la génération d'une sortie de détection de phase, par l'intermédiaire d'une table de vérité, qui émet en sortie une valeur de vérité parmi -1, 0 et +1, sur la base d'une polarité (+, -) du MSB, d'une polarité de l'OLB et d'une polarité d'une différence d'amplitude à sélectionner parmi les première et seconde différences d'amplitude,
- le filtrage de la valeur de vérité (0, ±1) ;
- la réception de la valeur de vérité filtrée (0, ±1) ; et
- la génération d'un signal d'horloge basé sur la valeur de vérité filtrée reçue (0, ±1),
- deux données analogiques consécutives (X₁, X₂) du signal de niveau M étant échantillonnées à une distance d'une période de symbole l'une par rapport à l'autre.

12. Programme informatique comprenant un code de programme comprenant des instructions qui, lorsqu'elles sont exécutées par un ordinateur, amènent l'ordinateur à réaliser le procédé selon la revendication 11.
